# EUROPÄISCHE PATENTANMELDUNG

(11) **EP 2 818 675 A1**
(43) Veröffentlichungstag der Anmeldung: **31.12.2014**
(21) Anmeldenummer: 13003232.9
(22) Anmeldetag: 25.06.2013
(51) Int. Cl.: F02D 29/04, F02D 29/06, B60W 30/188, B60W 10/06, B60W 10/30, E02F 9/20, E02F 9/22

(54) **Steuerung für das Antriebssystem einer Arbeitsmaschine**

(71) Anmelder: Liebherr Machines Bulle SA, 1630 Bulle (CH)
(72) Erfinder: Deeken, Michael, 1635 La Tour de Trême (CH); Quasthoff, Marcus, 1663 Epagny (CH); Seba, Bouzid, 1636 Broc (CH)
(74) Vertreter: Laufhütte, Dieter

(57) **Zusammenfassung**

Die vorliegende Erfindung zeigt eine Steuerung für das Antriebssystem einer Arbeitsmaschine, wobei das Antriebssystem eine Verbrennungskraftmaschine (1) mit mindestens zwei Abtrieben umfasst, über welche die Verbrennungskraftmaschine (1) mindestens zwei Komponenten (4, 5) des Antriebssystems antreibt, wobei die Steuerung eine Optimierungsfunktion aufweist, welche einen Soll-Betriebspunkt der Verbrennungskraftmaschine (1) für die jeweils geforderten Leistungen der Komponenten (4, 5) auf Grundlage eines Verbrauchskennfeldes (6) der Verbrennungskraftmaschine (1) und von Wirkungsgrad-Kennfeldern (7, 7') der angetriebenen Komponenten (4, 5) bestimmt.

## Beschreibung

Die vorliegende Erfindung betrifft eine Steuerung für das Antriebssystem einer Arbeitsmaschine, wobei das Antriebssystem eine Verbrennungskraftmaschine mit mindestens zwei Abtrieben umfasst, über welche die Verbrennungskraftmaschine mindestens zwei Komponenten des Antriebssystems antreibt.

Solche Antriebssysteme werden beispielsweise in mobilen Arbeitsmaschinen eingesetzt, um verschiedene Komponenten der Arbeitsmaschine wie den Fahrantrieb oder verschiedene Teile der Arbeitsausrüstung anzutreiben. Bei den Komponenten kann es sich dabei beispielsweise um Hydraulikkreisläufe aus Hydraulikpumpe und einem oder mehreren Hydraulikmotoren handeln, oder um elektrische Maschinen, welche von der Verbrennungskraftmaschine angetrieben werden.

Die Soll-Drehzahl der Verbrennungskraftmaschine wird dabei bei bekannten Steuerungssystemen entweder von einer Bedienperson manuell vorgegeben, oder anhand der von der Verbrennungskraftmaschine geforderten Gesamtleistung bestimmt. Hiermit ist üblicherweise ein hoher Kraftstoffverbrauch verbunden.

Aufgabe der vorliegenden Erfindung ist es, eine Steuerung für ein Antriebssystem zur Verfügung zu stellen, welche einen Betrieb des Antriebssystems mit einem geringeren Kraftstoffverbrauch ermöglicht.

Diese Aufgabe wird erfindungsgemäß durch eine Steuerung gemäß Anspruch 1 gelöst.

Die vorliegende Erfindung stellt eine Steuerung für ein Antriebssystem einer Arbeitsmaschine zur Verfügung, wobei das Antriebssystem eine Verbrennungskraftmaschine mit mindestens zwei Abtrieben umfasst, über welche die Verbrennungskraftmaschine mindestens zwei Komponenten des Antriebssystems antreibt. Erfindungsgemäß weist die Steuerung dabei eine Optimierungsfunktion auf, welche einen Soll-Betriebspunkt der Verbrennungskraftmaschine für die jeweils geforderten Leistungen der Komponenten auf Grundlage eines Verbrauchskennfeldes der Verbrennungskraftmaschine und von Wirkungsgradkennfeldern der angetriebenen Komponenten bestimmt. Durch die Berücksichtigung der Wirkungsgradkennfelder der angetriebenen Komponenten und der jeweils geforderten Leistung der Komponenten kann so anhand des Verbrauchskennfeldes der Verbrennungskraftmaschine ein Betriebspunkt gewählt werden, welcher zu einem möglichst niedrigen Kraftstoffverbrauch führt. So wird durch die vorliegende Erfindung ein besonders kraftstoffsparender Betrieb ermöglicht.

Bei dem Soll-Betriebspunkt der Verbrennungskraftmaschine kann es sich dabei insbesondere um den Drehzahl- Drehmoment- Arbeitspunkt der Verbrennungskraftmaschine handeln. Bei der Verbrennungskraftmaschine handelt es sich insbesondere um einen Verbrennungsmotor oder um eine Gasturbine. Besonders bevorzugt kann dabei als Verbrennungskraftmaschine ein Dieselmotor eingesetzt werden.

Gemäß der vorliegenden Erfindung kann eine beliebige Anzahl von angetriebenen Komponenten über die Verbrennungskraftmaschine angetrieben werden. Bei den Komponenten kann es sich insbesondere um elektrische Maschinen wie beispielsweise Starter-Generatoren, Lichtmaschinen etc. handeln, um hydraulische Komponenten wie beispielsweise Hydraulikpumpen oder Hydraulikmotoren, um Kompressoren oder andere Einrichtungen wie eine Umwälzpumpe, einen Lüfter etc. handeln.

Die Komponenten können dabei erfindungsgemäß mit der Verbrennungskraftmaschine direkt oder durch eine Übersetzung mechanisch gekoppelt sein bzw. gekoppelt werden. Dabei kann als Kopplung ein beliebiges Getriebe, ein Drehmomentwandler, eine Kupplung, ein Riemen- oder Kettenabtrieb oder ähnliches eingesetzt werden. Dabei kann eine Übersetzung für eine einzige oder auch für mehrere angetriebene Komponenten genutzt werden.

Weiterhin kann eine Anzahl der angetriebenen Komponenten und/oder Primärseiten der Übersetzung direkt entlang der Abtriebswelle der Verbrennungskraftmaschine angeordnet sein. Weiterhin ist es denkbar, eine Kaskadierung von Übersetzungen zu mehrstufigen Übersetzungen einzusetzen.

Weiterhin kann vorgesehen sein, dass mindestens eine der Komponenten einen von der Verbrennungskraftmaschine angetriebenen Energiewandler und mindestens einen von dem Energiewandler mit Energie versorgten Verbraucher aufweist. Bei einer solchen Komponente kann es sich dabei vorteilhafterweise um einen hydraulischen Antrieb aus Hydraulikpumpe und einen oder mehreren Verbrauchern, beispielsweise mindestens einem Hydraulikmotor, oder um einen elektrischen Antrieb aus Generator und mindestens einem Verbraucher, beispielsweise einem Elektromotor, handeln. Als Hydraulikmotoren können dabei insbesondere hydraulische Rotationsmotoren und Hydraulikzylinder zum Einsatz kommen. Mit der elektrischen Abgabeleistung des Generators könnte auch eine Batterie geladen werden, eine Heizung betrieben werden und/oder eine Lampe betrieben werden.

Über den Schrägwinkel der Hydraulikpumpe bzw. die Steuerelektronik des elektrischen Systems kann das Abnahmedrehmoment des betreffenden Abtriebs eingestellt werden.

Als Wirkungsgrad-Kennfeld einer solchen Komponente kann dabei insbesondere der Wirkungsgrad eingesetzt werden, mit welchem der Energiewandler die von der Verbrennungskraftmaschine abgegebene mechanische Leistung umwandelt.

Weiterhin kann für die Festlegung des optimalen Arbeitspunktes eine Gesamtbetrachtung durchgeführt werden. Die kumulierte Verlustleistung aller Systemkomponenten beginnend von der Verbrennungskraftmaschine, über die Verluste bei den Übersetzungen und über die Verluste bei den Abtrieben kann berücksichtigt werden.

Dabei sind Situationen üblich, bei welchen in der Arbeitsmaschine beginnend von der Verbrennungskraftmaschie bis zu einem Abtrieb bei Einhaltung eines bestimmten Arbeitspunktes sehr niedrige Verlustleistungen auftreten; jedoch entlang eines anderen Leistungspfades extrem hohe Verlustleistungen auftreten.

Besonders bevorzugt weisen dabei mindestens zwei der angetriebenen Komponenten einen von der Verbrennungskraftmaschine angetriebenen Energiewandler auf. Insbesondere können dabei zwei hydraulische Antriebe und/oder zwei elektrische Antriebe und/oder eine Kombination aus einem hydraulischen Antrieb und einem elektrischen Antrieb vorgesehen sein.

Selbstverständlich kann dabei der von der Verbrennungskraftmaschine angetriebene Energiewandler, insbesondere eine Hydraulikpumpe oder ein Generator, auch mehrere Motoren mit Energie versorgen.

Weiterhin kann erfindungsgemäß vorgesehen sein, dass mindestens eine der Komponenten eine Stellgröße aufweist, über deren Einstellung bei gegebener Abtriebs-drehzahl das Abtriebsdrehmoment, welches dem Antriebsstrang zum Antrieb der Komponente entnommen wird, einstellbar ist. Insbesondere kann es sich bei dieser Stellgröße um den Schrägwinkel einer in einem hydraulischen Antriebssystem eingesetzten Hydraulikpumpe oder um die Einstellung der Steuerelektronik in einem elektrischen Antriebssystem handeln.

Besonders bevorzugt weisen dabei mindestens zwei der Komponenten eine solche Stellgröße auf.

Besonders bevorzugt kann bei Komponenten, welche eine solche Stellgröße aufweisen, die gleiche Leistung bei unterschiedlichen Abtriebsdrehzahlen bereitgestellt werden, indem das Abtriebsdrehmoment entsprechend eingestellt wird. Vorteilhafterweise beschreibt dabei das Wirkungsgradkennfeld einer Komponente den Wirkungsgrad der Komponente in Abhängigkeit von Abtriebsdrehmoment und Abtriebs-drehzahl.

Weist das System weitere Stellgrößen auf, wie beispielsweise bei einem hydraulischen System den Schrägkwinkel eines Hydraulikmotors, oder eine variable Übersetzung, so kann als Wirkungsgrad ein im Hinblick auf diese Stellgröße optimierter Wirkungsgrad berücksichtigt werden.

Vorteilhafterweise umfasst die Optimierungsfunktion der erfindungsgemäßen Steuerung eine Funktion zur Bestimmung einer Systemkennlinie von möglichen Betriebspunkten, durch welche die jeweils geforderten Leistungen der Komponenten erzielt werden können. Die Systemkennlinie wird dabei vorteilhafterweise von Drehmoment-Drehzahl-Betriebspunkten der Verbrennungskraftmaschine gebildet, bei welchen die jeweils geforderten Leistungen der Komponenten erzielbar sind.

Dabei kann vorgesehen sein, dass die Optimierungsfunktion aus der Systemkennlinie den Betriebspunkt mit minimalem Kraftstoffverbrauch auswählt. Hierdurch wird ein besonders sparsamer Betrieb ermöglicht.

Vorteilhafterweise werden dabei gemäß der vorliegenden Erfindung beschränkende Randbedingungen berücksichtigt. Insbesondere können dabei Volllast-Kennlinien bestimmter Antriebsstrangkomponenten und/oder Drehzahl-Drehmoment-Teilbereiche, in welchen die Verbrennungskraftmaschine nicht betrieben werden darf, als Randbedingungen berücksichtigt werden. Hierdurch wird der tatsächlich nutzbare Bereich der Systemkennlinie bestimmt. Vorteilhafterweise wird aus diesem tatsächlich nutzbaren Bereich der Systemkennlinie der Soll-Betriebspunkt der Verbrennungskraftmaschine ausgewählt.

Weiterhin vorteilhafterweise kann die Steuerung eine Berechnungsfunktion aufweisen, welche anhand von Wirkungsgrad-Kennfeldern der angetriebenen Komponenten Einzel-Kennlinien von möglichen Betriebspunkten für die jeweiligen Abtriebe berechnet. Vorteilhafterweise wird dann aus diesen möglichen Betriebspunkten für die jeweiligen Abtriebe die Systemkennlinie der Verbrennungskraftmaschine berechnet. Die Systemkennlinie der erfindungsgemäßen Arbeitsmaschine beruht damit erfindungsgemäß zum einen auf den Wirkungsgradkennfeldern der angetriebenen Komponenten, als auch von den je von den Komponenten geforderten Leistungen.

Sofern mindestens einer der Abtriebe seinerseits auch wiederum für die von ihm angeforderte Leistung einen weiteren Freiheitsgrad (nicht gekoppelt bzw. nicht unmittelbar gekoppelt z. B. eine wählbare Übersetzung) über die Drehzahl der Verbrennungskraftmaschine) hat, kann zunächst eine Optimierung über diesen Freiheitsgrad erfolgen und hieraus eine optimierte Systemkennlinie berechnet werden. Alternativ können in Abhängigkeit von diesem Freiheitsgrad mehrere Systemkennlinien berechnet werden. In diesem Fall muss die Optimierungsfunktion den Betriebspunkt des minimalen Kraftstoffverbrauchs aus mehreren Systemkennlinien bestimmen.

Weiterhin vorteilhafterweise bestimmt die Optimierungsfunktion neben dem Soll-Betriebspunkt der Verbrennungskraftmaschine die jeweiligen Soll-Betriebspunkte der Komponenten, so dass durch den Soll-Betriebspunkt der Verbrennungskraftmaschine ein möglichst geringer Kraftstoffverbrauch erreicht wird, und durch die entsprechend angepassten Sollbetriebspunkte der Komponenten die jeweils geforderten Leistungen zur Verfügung gestellt werden.

Bei Abtrieben mit nur einer Stellgröße ist diese durch den Soll-Betriebspunkt der Verbrennungskraftmaschine und die geforderte Leistung des Abtriebs vorgegeben.

Vorteilhafterweise weist die Steuerung dabei eine Steuerungsfunktion auf, welche den Ist-Betriebspunkt der Verbrennungskraftmaschine auf Grundlage des von der Optimierungsfunktion vorgegebenen Soll-Betriebspunktes ansteuert. Weiterhin steuert die Steuerungsfunktion vorteilhafterweise die Komponenten des Antriebssystemes an, und bestimmt insbesondere die Stellgröße der Komponenten.

Weiterhin kann vorgesehen sein, dass die Steuerung eine erste Steuerebene aufweist, welche auf Änderungen in den Leistungsanforderungen durch Ansteuerung der Komponenten reagiert. Weiterhin kann eine zweite Steuerebene vorgesehen sein, welche zur Einstellung eines optimalen Betriebspunktes den Soll-Betriebspunkt der Verbrennungskraftmaschine und der Komponenten an die neuen Leistungsanforderungen anpasst. Vorteilhafterweise erfolgt die Regelung auf der ersten Steuerebene dabei schneller als auf der zweiten Steuerebene, um einen zu schnellen Wechsel der Betriebspunkte der Verbrennungskraftmaschine zu vermeiden.

Die erfindungsgemäße Steuerung kann weiterhin eine Prädiktionsfunktion aufweisen, welche zukünftige Leistungsanforderungen der Komponenten schätzt. Insbesondere kann die Steuerung dabei den Soll-Betriebspunkt der Verbrennungskraftmaschine und der Komponenten unter Berücksichtigung der zukünftigen Leistungsanforderungen bestimmen.

Insbesondere kann dabei bei einer prognostizierten anhaltend niedrigen Leistungsanforderung und bei einer prognostizierten geringen Leistungssteigerung, die mit einer ausreichend hohen Wahrscheinlichkeit hinterlegt ist, der Betrieb bei geringeren Drehzahlen freigegeben werden. So kann durch die Bereitstellung von Prognoseinformation über die unmittelbar folgende Belastung des Abtriebs die Systemeffizienz nochmals gesteigert werden.

Weiterhin kann die erfindungsgemäße Steuerung bei Antriebssystemen eingesetzt werden, bei welchen mindestens eine der Komponenten einen Energiespeicher umfasst oder mit einem solchen verbunden ist. Ferner ist es möglich, dass eine im Normalfall angetriebene Komponente Leistung in den Antriebsstrang einbringt, wo diese sofort zur Entlastung der Verbrennungskraftmaschine verwendet wird (einfache Rekuperation). Es ist hierbei auch möglich, dass ein Energiespeicher mit Rekuperationsleistung aufgeladen wird (z. B. pneumatische Energie, elektrische Energie etc.). Es ist hierbei auch möglich, dass die Verbrennungskraftmaschine durch Nutzung der Rekuperationsleistung geschleppt wird. Vorteilhafterweise ist dabei eine Energiemanagementfunktion vorgesehen, welche den Betrieb des Energiespeichers oder/und der Rekuperation ansteuert.

Vorteilhafterweise kann die erfindungsgemäße Steuerung dabei eine Energiemanagementfunktion aufweisen, wobei eine koordinierte Bestimmung des Soll-Betriebspunktes der Verbrennungskraftmaschine sowie der Sollbetriebspunkte derjenigen Abtriebe, die ihrerseits nochmals einen Freiheitsgrad haben (z. B. im Fall einer mechanischen Kopplung über eine wählbare Übersetzung oder im Fall einer elektrischen Kopplung den Freiheitsgrad eine elektrische Leistung unter wählbarer Abgabespannung und damit festgelegter Stromstärke bzw. wählbarer Stromstärke und damit festgelegter Spannung) und des Energiemanagements erfolgt. Insbesondere kann die Energiemanagementfunktion dabei zur Steuerung der Energiezuführung zu einem Energiespeicher und der Energieentnahme aus einem solchen dienen. Alternativ oder zusätzlich kann die Energiemanagementfunktion auch dem Wärmemanagement dienen. Durch die Berücksichtigung des Energiemanagements bei der Bestimmung des optimalen Betriebspunktes kann nochmals eine Verbesserung der Kraftstoffökonomie erreicht werden.

Die erfindungsgemäße Steuerung kann dabei insbesondere zur Ansteuerung eines Antriebssystems einer mobilen Arbeitsmaschine eingesetzt werden. Insbesondere umfasst eine solche mobile Arbeitsmaschine dabei ein Fahrwerk mit einem Fahrantrieb, über welches die Arbeitsmaschine bewegt werden kann. Dabei kann es sich bei einer der Komponenten, welche von der Verbrennungskraftmaschine angetrieben wird, um den Fahrantrieb handeln. Insbesondere kann die Arbeitsmaschine dabei eine oder mehrere bereifte Achsen oder einen Kettenantrieb aufweisen.

Besonders bevorzugt weist die erfindungsgemäße Arbeitsmaschine eine Arbeitsausrüstung auf, welche über einen oder mehrere Antriebe bewegt wird. Insbesondere kann es sich dabei um hydraulische Antriebe handeln. Dabei kann es sich bei einer oder mehreren der Komponenten, welche von der Verbrennungskraftmaschine angetrieben werden, um einen oder mehrere der Antriebe der Arbeitsausrüstung handeln. Insbesondere kann die Arbeitsausrüstung dabei ein oder mehrere Element/Elemente umfassen, welches über einen oder mehrere Hydraulikzylinder in einer Wipp-Ebene bewegbar ist/sind, insbesondere einen Ausleger oder Stiel etc.

Besonders bevorzugt kann es sich bei der erfindungsgemäßen Arbeitsmaschine um eine mobile Erdbewegungsmaschine wie beispielsweise einen Bagger, einen Radlader oder einen Muldenkipper handeln. Ebenso kann es sich bei der mobilen Arbeitsmaschine um eine mobile Umschlagmaschine, wie beispielsweise um einen Kran oder um einen Seilbagger, handeln.

Besonders bevorzugt kommt die vorliegende Erfindung dabei bei Systemen zum Einsatz, bei welchen die Abtriebsdrehzahl der Komponenten in einem festen Verhältnis zur Drehzahl der Verbrennungskraftmaschine steht. Insbesondere ist dabei ein Getriebe mit konstanter Übersetzung vorgesehen, welches die Komponenten mit der Abtriebswelle der Verbrennungskraftmaschine verbindet. Alternativ können die Komponenten auch direkt mit der Abtriebswelle verbunden sein.

Die vorliegende Erfindung ist jedoch selbstverständlich auch bei Systemen mit einer variablen Übersetzung einsetzbar, bspw. bei Systemen mit einem oder mehreren mehrstufigen oder kontinuierlich veränderbaren Getrieben. Vorteilhafterweise wird dieser Freiheitsgrad bei der erfindungsgemäßen Optimierung bzw. Gesamtbetrachtung berücksichtigt.

Die erfindungsgemäße Steuerung weist dabei vorteilhafterweise eine Steuerungselektronik auf, in welcher die erfindungsgemäßen Funktionen hard- oder softwaremäßig implementiert sind.

Insbesondere können dabei Speicherbereiche vorgesehen sein, in welchen das Verbrauchskennfeld der Verbrennungsmaschine und die Wirkungsgradkennfelder der angetriebenen bzw. der betriebenen Komponenten; verallgemeinert aller am Kopplungspfad beteiligten Komponenten hinterlegt sind.

Vorteilhafterweise werden die Systemkennlinien dabei individuell während des Betriebs (on line) berechnet. Weiterhin vorteilhafterweise werden auch die Soll-Betriebspunkte individuell während des Betriebs (on line) berechnet.

Alternativ oder zusätzlich können in den Speicherbereichen der Steuerung auch Kennfelder oder Systemkennlinien hinterlegt sein, welche aus den Wirkungsgrad-kennfeldern der angetriebenen Komponenten bei unterschiedlichen von der Komponente geforderten Leistungen errechnet wurden. Weiterhin können auch entsprechende Soll-Betriebspunkte hinterlegt sein, welche aus den Wirkungsgradkennfeldern und dem Verbrauchskennfeld der Verbrennungskraftmaschine berechnet wurden.

Vorteilhafterweise erfolgt dabei in der erfindungsgemäßen Steuerung die Bestimmung des Soll-Betriebspunktes und gegebenenfalls die Ansteuerung der Verbrennungskraftmaschine bzw. der Komponenten automatisch auf Grundlage von den der Steuerung zugeführten Sensorsignalen und/oder Eingangsgrößen. Eingangsgrößen der Steuerung sind dabei insbesondere die jeweils geforderten Leistungen der Komponenten, welche beispielsweise von einer Bedienperson durch Eingabegeräte vorgegeben werden können.

Aus diesen berechnet die Steuerung dann automatisch den Soll-Betriebspunkt der Verbrennungskraftmaschine und vorteilhafterweise die Soll-Betriebspunkte der Komponenten. Vorteilhafterweise erfolgt dann eine entsprechende automatische Ansteuerung der Verbrennungskraftmaschine sowie der Komponenten zum Erreichen der Soll-Betriebspunkte.

Vorteilhafterweise kann die erfindungsgemäße Steuerung dabei an unterschiedliche Antriebssysteme angepasst werden, indem bei dem Einsatz einer anderen Komponente ein entsprechendes geändertes Wirkungsgradkennfeld berücksichtigt wird, oder bei Verwendung einer anderen Verbrennungskraftmaschine ein entsprechend angepasstes Verbrauchskennfeld. Hierdurch kann die erfindungsgemäße Steuerung problemlos bei beliebigen Antriebssystemen eingesetzt werden.

Die vorliegende Erfindung umfasst weiterhin ein Antriebssystem mit einer erfindungsgemäßen Steuerung, wie sie oben beschrieben wurde.

Die vorliegende Erfindung umfasst weiterhin eine Arbeitsmaschine mit einem Antriebssystem und einer erfindungsgemäßen Steuerung, wie sie oben beschrieben wurde. Bei der Arbeitsmaschine handelt es sich dabei, wie bereits oben dargestellt, bevorzugt um eine mobile Arbeitsmaschine.

Die vorliegende Erfindung umfasst weiterhin ein Verfahren zur Ansteuerung eines Antriebssystems einer Arbeitsmaschine, wobei das Antriebssystem eine Verbrennungskraftmaschine mit mindestens zwei Abtrieben umfasst, über welche die Verbrennungskraftmaschine mindestens zwei Komponenten des Antriebssystems antreibt. Erfindungsgemäß ist dabei vorgesehen, dass der Betriebspunkt der Verbrennungskraftmaschine auf Grundlage der jeweils geforderten Leistung der Komponenten, eines Verbrauchskennfeldes der Verbrennungskraftmaschine und von Wirkungskraftkennfeldern der angetriebenen Komponenten optimal eingestellt wird. Hierdurch kann ein besonders kraftstoffsparender Betrieb ermöglicht werden.

Vorteilhafterweise erfolgt das erfindungsgemäße Verfahren dabei so, wie dies bereits oben im Hinblick auf die Steuerung näher erläutert wurde. Insbesondere werden dabei erfindungsgemäß die im Hinblick auf die Steuerung beschriebenen Funktionen eingesetzt, um den Soll-Betriebspunkt der Verbrennungskraftmaschine zu bestimmen.

Vorteilhafterweise wird das erfindungsgemäße Verfahren dabei zum Betrieb von Antriebssystemen einer Arbeitsmaschine eingesetzt, wie sie oben bereits dargestellt wurden.

Die vorliegende Erfindung wird nun anhand von Zeichnungen sowie eines Ausführungsbeispiels näher beschrieben.

Dabei zeigen:
- Figur 1: ein erstes Ausführungsbeispiel eines erfindungsgemäßen Antriebssystems mit einer Verbrennungskraftmaschine mit zwei Abtrieben,
- Figur 2: eine schematische Darstellung eines Verbrauchskennfeldes der Verbrennungskraftmaschine und unter Berücksichtigung eines Wirkungsgradkennfeldes einer ersten Komponente,
- Figur 3: eine schematische Darstellung des Verbrauchskennfeldes einer Verbrennungskraftmaschine unter Berücksichtigung eines Wirkungsgradkennfeldes einer zweiten Komponente und
- Figur 4: ein Verbrauchskennfeld der Verbrennungskraftmaschine unter Berücksichtigung der Wirkungsgradkennfelder zweier angetriebener Komponenten, in welcher eine Systemkennlinie bestimmt wurde.

Die vorliegende Erfindung betrifft die Ansteuerung des Antriebsstranges einer Arbeitsmaschine bestehend aus einer Verbrennungskraftmaschine, insbesondere einem Verbrennungsmotor oder einer Gasturbine, welche mehrere Abtriebe aufweist.

Die Anordnung besteht dabei aus der Verbrennungskraftmaschine sowie einer beliebigen Anzahl von angetriebenen Komponenten. Vorteilhafterweise steht die Drehzahl, mit welcher die Komponenten über die Abtriebe des Antriebsstranges angetrieben werden, dabei in einem festen Verhältnis zur Drehzahl der Verbrennungskraftmaschine bzw. zu der Drehzahl der Abtriebswelle der Verbrennungskraftmaschine. Insbesondere kann dabei ein direkter Antrieb oder der Antrieb über ein Getriebe mit einer konstanten Übersetzung eingesetzt werden.

Bei den Komponenten des Antriebsstranges kann es sich dabei um Sekundärantriebe handeln, so dass die Verbrennungskraftmaschine zunächst einen Energiewandler antreibt, welcher wiederum mit seiner Abgabeleistung einen oder mehrere Motoren antreibt. Insbesondere kann es sich bei den Komponenten um hydraulische Antriebskreisläufe handeln, bei welchen eine Hydraulikpumpe ein oder mehrere Hydraulikmotoren antreibt. Als Hydraulikmotoren kommen dabei beispielsweise hydraulische Rotationsmotoren und/oder Hydraulikzylinder zum Einsatz. Ebenso kann es sich bei dem Komponenten um elektrische Antriebe aus Generator, Steuerelektronik oder Elektromotor handeln. Die Sekundärantriebe weisen dabei vorteilhafterweise eine Stellgröße auf, über welche die Leistung der Sekundärantriebe direkt oder indirekt gesteuert oder geregelt werden kann.

Darüber hinaus ist es auch möglich, dass bestimmte Komponenten des Antriebsstranges mit einem Energiespeicher verbunden sind. Beispielsweise kann dabei ein elektrischer oder eine hydraulischer Energiespeicher in einem entsprechenden Antriebskreislauf eingesetzt werden.

Ferner ist es möglich, dass eine im Normalfall angetriebene Komponente Leistung in den Antriebsstrang einbringt, wo diese sofort zur Entlastung der Verbrennungskraftmaschine verwendet wird (einfache Rekuperation). Es ist hierbei auch möglich, dass die Verbrennungskraftmaschine geschleppt wird. Wird ein Antriebssystem mit Energiespeicher oder einfacher Rekuperation eingesetzt, ist dabei vorteilhafterweise ein Energiemanagementsystem vorgesehen, welches den Betrieb des Energiespeichers und/oder die einfache Rekuperation ansteuert.

Erfindungsgemäß wird der Betrieb des Antriebsstranges nun über eine Antriebsstrang-Führungssoftware koordiniert, welche in der Steuerung des Antriebsstranges implementiert ist. Der Antriebsstrangführungssoftware werden bestimmte Informationen zugeführt, zum Beispiel die relevanten Sollwerte jedes Abtriebs und/oder aufbereitete Sensorsignale und/oder Ausgangsgrößen anderer Softwarefunktionen.

Die Antriebsstrangführungssoftware berechnet hieraus Stellgrößen und gibt diese den Betrieb des Antriebsstranges betreffenden Stellgrößen an entsprechende Aktuatoren oder andere Stellglieder direkt oder indirekt über andere Softwarefunktionen vor, um den Verbrennungsmotor und die Komponenten des Antriebsstrangs anzusteuern.

Insbesondere gibt die Antriebsstrangführungssoftware dabei den Sollwert des Drehzahl-Drehmoment-Arbeitspunktes der Verbrennungskraftmaschine vor. Weiterhin gibt die Antriebstrangführungssoftware die Sollwerte der Stellgrößen der Komponenten des Antriebsstranges vor. Solche Stellgrößen können dabei beispielsweise der Schrägwinkel von Hydraulikpumpen oder die Leistungsaufnahme einer Steuerelektronik eines elektronischen Antriebs sein.

In der Antriebsstrangführungssoftware sind echtzeitfähige Wirkungsgradmodelle aller Antriebsstrangkomponenten sowie das Verbrauchskennfeld der Verbrennungskraftmaschine hinterlegt. Zusätzlich können auch Schlepp-Kennfelder der Antriebsstrangkomponenten hinterlegt sein.

Anhand dieser Kennfelder können für die Sollwerte der einzelnen Abtriebe die Leistungsaufnahmen auf das Bezugssystem Abtriebswelle der Verbrennungskraftmaschine berechnet werden.

Als Ergebnis ergibt sich nicht ein jeweiliger Wert einer Leistung, sondern eine Aufspaltung nach Antriebswellendrehmoment und Antriebswellendrehzahl, d. h. eine Kennlinie. Diese für jeden Abtrieb spezifische Kennlinie gibt dabei die Betriebspunkte aus Abtriebswellendrehmoment und Abtriebswellendrehzahl der Verbrennungskraftmaschine an, welche unter Berücksichtigung des jeweiligen Wirkungsgrades der Komponente die von der Komponente geforderte Leistung zur Verfügung stellen können. Jeder Betriebspunkt entspricht dabei einer entsprechenden Einstellung der Stellgröße der Komponente.

In der Antriebsstrangführungssoftware werden diese Einzelkennlinien dann je nach dem Anteil der einzelnen Abtriebe an der geforderten Gesamtleistung zu einer Systemkennlinie kombiniert. Damit wird in der Antriebsstrangführungssoftware ein kumuliertes Gesamtabtriebsdrehmoment in Abhängigkeit von der Abtriebswellendrehzahl aller Einzelabtriebe unter Berücksichtigung ihrer Übersetzung zur Abtriebswelle des Verbrennungsmotors bestimmt.

Die Systemkennlinie stellt daher die Summe aller möglichen Drehzahl-Drehmoment-Arbeitspunkte der Verbrennungskraftmaschine dar, über welche die jeweils geforderten Leistungen der Abtriebe bereitgestellt werden können, d.h. das über der Drehzahl aufgetragene Summen-Drehmoment der Verbrennungskraftmaschine, über welches die jeweils geforderten Leistungen der Abtriebe bereitgestellt werden können. Die Systemkennlinie ist damit jeweils abhängig von den individuellen Soll-Werten der Abtriebe.

Daraufhin werden in der Antriebsstrangführungssoftware durch hinterlegte Parameter wie z. B. Volllast-Kennlinien bestimmter Antriebsstrangkomponenten, Drehzahl-Drehmoment-Teilbereiche, in denen die Verbrennungskraftmaschine nicht betrieben werden soll und/oder weiteren aus anderen Softwaremodulen zugeführten Informationen die limitierenden Randwerte bestimmt, die den tatsächlich nutzbaren Bereich der Systemkennlinie möglicherweise einschränken.

Innerhalb des verbleibenden Abschnitts der Systemkennlinie besteht jeweils ein Drehzahl-Drehmoment-Arbeitspunkt, in dem die erforderliche Gesamtleistung bei minimalem Kraftstoffverbrauch aufgebracht werden kann. Zur Bestimmung des Soll-Arbeitspunktes ist damit eine Optimierungsfunktion vorgesehen, welche anhand des Verbrauchskennfeldes der Verbrennungskraftmaschine sowie der Wirkungsgradmodelle der Komponenten einen energetisch optimierten Betriebspunkt bestimmt. Der energetisch optimierte Betriebspunkt der Verbrennungskraftmaschine korrespondiert dabei mit entsprechenden Betriebspunkten der Komponenten, wobei die Antriebsstrangführungssoftware die Verbrennungskraftmaschine sowie die Komponenten entsprechend ansteuert.

Sofern mindestens einer der Abtriebe seinerseits auch wiederum für die von ihm angeforderte Leistung einen weiteren Freiheitsgrad (nicht gekoppelt bzw. nicht unmittelbar z. B. wählbare Übersetzung) über die Drehzahl der Verbrennungskraftmaschine) hat, kann zunächst eine Optimierung über diesen Freiheitsgrad erfolgen und hieraus ein optimiertes Wirkungsgradkennfeld für diesen Abtrieb berechnet werden. Alternativ können in Abhängigkeit von diesem Freiheitsgrad mehrere Systemkennlinien berechnet werden. In diesem Fall muss die Optimierungsfunktion den Betriebspunkt des minimalen Kraftstoffverbrauchs aus mehreren Systemkennlinien bestimmen.

Da eine gewisse Systemdynamik (Steigerung der Abgabeleistung innerhalb einer Zeitspanne) sichergestellt sein muss, ist es im transienten Betrieb nicht sichergestellt, dass die Verbrennungskraftmaschine immer im energetisch optimalen Betriebspunkt betrieben werden kann. Innerhalb der Antriebsstrangführungssoftware sind der Funktion zur Bestimmung der Systemkennlinie aus Sicht des Signalflusses daher weitere Funktionen überlagert, die gegebenenfalls jeweils eine situationsbedingte Abweichung von dem energetisch optimalen Arbeitspunkt bewirken.

Bei einer Weiterentwicklung kann die Antriebsstrangführungssoftware mit einer Energiemanagementsoftware des Antriebsstranges gegenseitig Informationen austauschen. Bei der Energiemanagementsoftware kann es sich um eine Hybrid-und/oder Wärme-Managementsoftware handeln.

Durch Bereitstellung von Prognoseinformation über die unmittelbar folgende Belastung der Abtriebe kann die Systemeffizienz nochmals gesteigert werden.

Im Fall eines nichthybriden Antriebsstranges kann bei einer prognostizierten geringen Leistungssteigerung, die mit einer ausreichend hohen Wahrscheinlichkeit hinterlegt ist, der Betrieb bei geringeren Drehzahlen freigegeben werden. Bei einem Hybridantrieb kann die Prognoseinformation bekanntlich zur effizienteren Nutzung der Energiespeicher verwendet werden.

Erfindungsgemäß bietet die Antriebsstrangführungssoftware damit ein generisches Verfahren, welches auf eine beliebige Anzahl von beliebig gestalteten Abtrieben angewendet werden kann. Dabei kann das Verfahren auf beliebige Antriebsstrangkomponenten und beliebige Anordnungen des Antriebsstranges angewendet werden. Hierbei müssen nur jeweils angepasste Wirkungsgradmodelle und/oder Schlepp-kennfelder der Antriebsstrangkomponenten sowie das Verbrauchskennfeld der jeweils eingesetzten Verbrennungskraftmaschine in der Steuerung hinterlegt werden.

Alternativ kann aus diesen Daten auch jeweils ein optimierter Betriebspunkt und/oder eine Systemkennlinie in Abhängigkeit von den individuellen Soll-Werten der Abtriebe berechnet und in der Antriebsstrangführungssoftware hinterlegt werden.

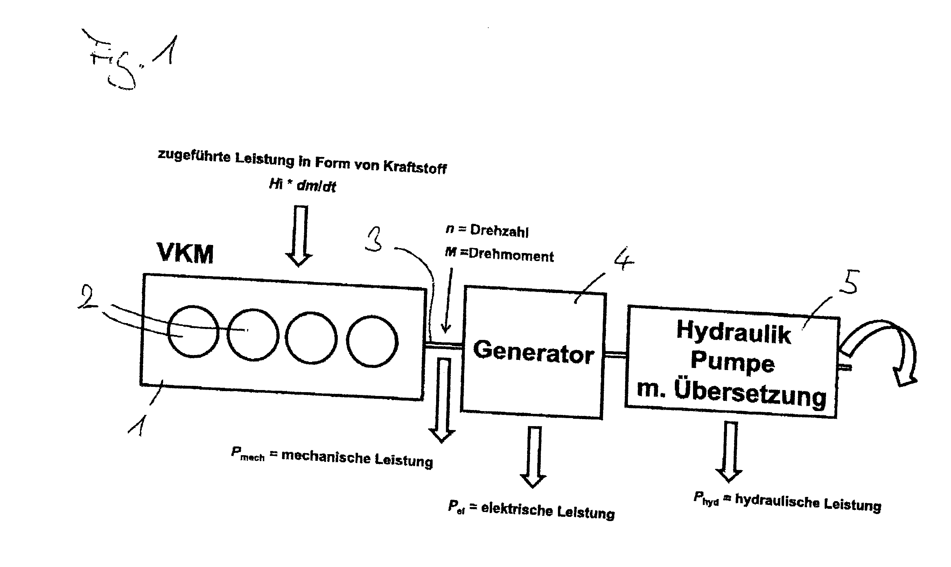

Figur 1 zeigt nun ein Ausführungsbeispiel für einen Antriebsstrang, bei welchem eine Steuerung gemäß der vorliegenden Erfindung eingesetzt werden kann. Dabei ist eine Verbrennungskraftmaschine 1 vorgesehen, welche an ihrer Abtriebswelle 3 eine mechanische Leistung P_{mech} zur Verfügung stellt. Im Ausführungsbeispiel handelt es sich bei der Verbrennungskraftmaschine dabei um einen Verbrennungsmotor mit den schematisch eingezeichneten Zylindern 2. Die Leistung der Verbrennungskraftmaschine 1 wird dabei über die Zufuhr von Kraftstoff angesteuert.

Die Verbrennungskraftmaschine 1 weist zwei Abtriebe auf, über welche zwei Komponenten 4 und 5 angetrieben werden. Im Ausführungsbeispiel sind die beiden Komponenten 4 und 5 dabei beide direkt auf der Abtriebswelle 3 der Verbrennungskraftmaschine angeordnet. Alternativ könnten die beiden Komponenten 4 und 5 jedoch auch über ein Getriebe mit der Abtriebswelle 3 in Verbindung stehen, insbesondere über ein Getriebe mit fester Drehzahlübersetzung.

Im Ausführungsbeispiel handelt es sich bei der Komponente 4 um ein elektrisches Antriebssystem, bei welchen ein Generator durch die Verbrennungskraftmaschine angetrieben wird, welcher eine elektrische Leistung Pₑₗ zur Verfügung stellt, z. B. zum Antrieb eines anderen Elektromotors. Bei der Komponente 5 handelt es sich um ein hydraulisches Antriebssystem, bei welchem eine Hydraulikpumpe von der Verbrennungskraftmaschine angetrieben wird und hydraulische Leistung P_{hyd} zur Verfügung stellt, z. B. zum Antrieb eines Hydraulikmotors wie beispielsweise eines hydraulischen Rotationsmotors oder eines Hydraulikzylinders.

Alternativ oder zusätzlich könnten auch zwei hydraulische Antriebssysteme oder zwei elektrische Antriebssysteme von der Verbrennungskraftmaschine angetrieben werden, oder auch mehr als zwei, beispielsweise vier hydraulische Antriebssysteme

Die von der Verbrennungskraftmaschine angetriebenen Komponenten weisen dabei jeweils eine Stellgröße auf, welche bei dem Hydrauliksystem beispielsweise der Schrägkwinkel der Hydraulikpumpe, bei dem elektrischen Antriebssystem die Ansteuerung der Steuerelektronik zum Antrieb des Elektromotors darstellen kann. Dabei kann durch die Einstellung der Stellgröße bei einer vorgegebenen Drehzahl der Verbrennungskraftmaschine bzw. bei einer vorgegebenen Drehzahl des Abtriebs, welcher die Komponente antreibt, die Drehmomentaufnahme der Komponente und damit die Leistungsaufnahme eingestellt werden.

Die Komponenten setzen die aufgenommene Leistung aber nicht zu 100 % um, sondern weisen einen Wirkungsgrad auf, welcher das Verhältnis zwischen aufgenommener und abgegebener Leistung für jeder Komponente darstellt. Dieser Wirkungsgrad ist dabei üblicherweise abhängig von der Drehzahl und/oder dem Drehmoment, bei welchem die Komponente betrieben wird.

Insbesondere kann dabei als Wirkungsgrad im hydraulischen System 5 der Wirkungsgrad, mit welchem die Hydraulikpumpe die von der Verbrennungskraftmaschine abgegebene mechanische Leistung in hydraulische Leistung umsetzt, eingesetzt werden. Bei der elektrischen Komponente 4 kann als Wirkungsgrad der Wirkungsgrad des Generators, mit welchem dieser die von der Verbrennungskraftmaschine abgegebene mechanische Leistung in elektrische Leistung umwandelt, berücksichtigt werden.

Weist das System weitere Stellgrößen auf, wie beispielsweise bei einem hydraulischen System den Schwenkwinkel eines Hydraulikmotors, so kann als Wirkungsgrad ein im Hinblick auf diese Stellgröße optimierter Wirkungsgrad berücksichtigt werden.

Maßgeblich für die Festlegung des optimalen Arbeitspunktes ist ein Gesamtbetrachtung. Die kumulierte Verlustleistung aller Systemkomponenten beginnend von der Verbrennungskraftmaschine, über die Verluste bei den Übersetzungen und über die Verluste den Abtrieben.

Dabei sind Situationen üblich bei in der Arbeitsmaschine beginnend von der Verbrennungskraftmaschine bis zu einem Abtrieb bei Einhaltung eines bestimmten Arbeitspunktes sehr niedrige Verlustleistungen auftreten; jedoch entlang eines anderen Leistungspfades extrem hohe Verlustleistungen auftreten.

Bei einer vorgegebenen Soll-Leistung, welche von einer Komponente abgegeben werden soll, lässt sich anhand des Wirkungsgrad-Kennfelds der Komponente damit die hierfür benötigte Leistungsaufnahme einer Komponente auf das Bezugssystem Abtriebswelle der Verbrennungskraftmaschine berechnen. Durch die Möglichkeit, über die Stellgröße der jeweiligen Komponente deren Leistung direkt oder indirekt anzusteuern, ergibt sich so bei vorgegebener Abgabeleistung einer Komponente eine Kennlinie aus möglichen Drehzahl-Drehmoment-Betriebspunkten des Abtriebs, über welchen die Komponente angetrieben wird. Ein solcher Betriebspunkt entspricht dabei einer entsprechenden Einstellung der Stellgröße der Komponente.

Dadurch, dass mehrere Abtriebe vorgesehen sind, müssen die jeweiligen Einzel-kennlinien der Abtriebe kumuliert werden, um so die Systemkennlinie der Verbrennungskraftmaschine zu bestimmen, d. h. die Drehzahl-Drehmoment-Arbeitspunkte der Verbrennungskraftmaschinen, über welche die geforderten Leistungen der jeweiligen Abtriebe bzw. Komponenten zur Verfügung gestellt werden kann. Entlang einer entsprechenden Systemkennlinie kann dann durch eine Optimierungsfunktion ein Betriebspunkt ausgewählt werden, welcher einen möglichst geringen Kraftstoffverbrauch ergibt.

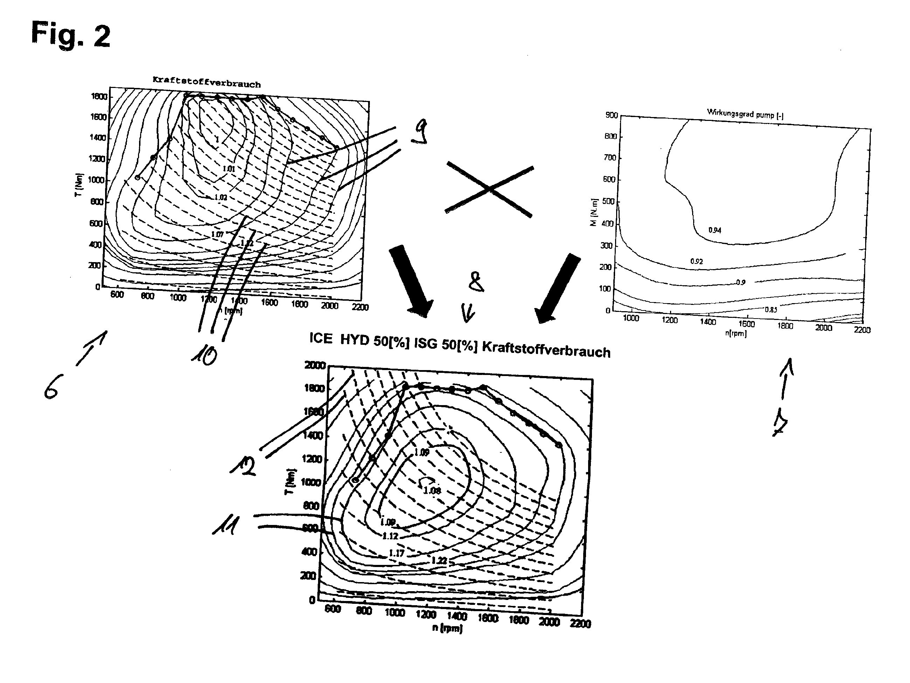

In Figur 2 ist dabei anhand von Diagrammen dargestellt, wie eine solche Bestimmung erfolgen kann, wenn nur eine der beiden Komponenten angetrieben wird und damit 100 % der Leistung der Verbrennungskraftmaschine aufnimmt. Dabei ist links oben ein Diagramm 6 des Kraftstoffverbrauchs der Verbrennungskraftmaschine in Abhängigkeit von der Drehzahl und dem Drehmoment gezeigt. Dabei sind mit den Linien 9 Linien gleichen Verbrauchs eingezeichnet, und mit den Linien 10 Linien gleicher Abgabeleistung. Die Verbrauchskennlinien sind normiert auf den Wert des minimalen spezifischen Verbrauchs.

Das rechts dargestellte Diagramm 7 zeigt nun den Wirkungsgrad einer Hydraulikpumpe, wie sie bei einem hydraulischen Antrieb 5 zum Einsatz kommen kann, in Abhängigkeit von Drehzahl und Drehmoment.

Das Diagramm 8 zeigt nun eine Überlagerung des Kraftstoffverbrauchdiagramms mit dem Wirkungsgradkennfeld. Dabei zeigt sich, dass sowohl die Linien gleichen Verbrauchs 11, als auch die Linien gleicher Leistung 12 durch die Überlagerung mit dem Wirkungsgradkennfeld der Komponente verschoben und verbogen werden.

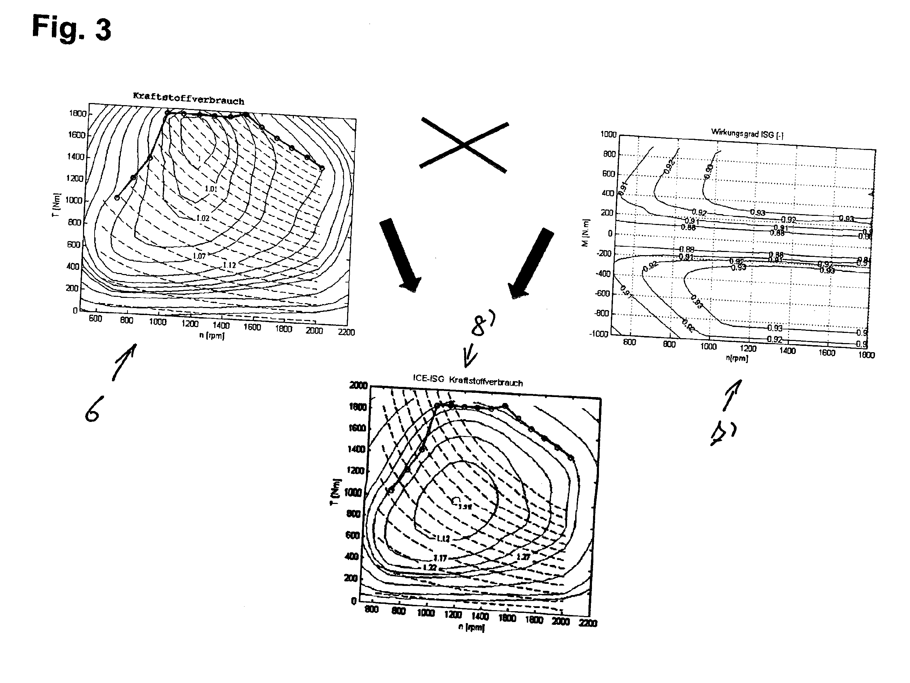

Figur 3 zeigt wiederum das Diagramm 6 für den Kraftstoffverbrauch, welches nun aber mit dem Diagramm 7' für den Wirkungsgrad einer anderen Komponente, in diesem Fall des Generators für ein elektrisches Antriebssystem 4 in dem Diagramm 8' überlagert wurde. Durch den vollkommen anderen Verlauf des Wirkungsgradkennfeldes des Generators ergibt sich damit auch ein komplett anderes Kraftstoffverbrauchs-Diagramm 8'.

Der optimale Betriebspunkt der Verbrennungskraftmaschine kann daher bei gleicher angeforderter Leistung an der Abtriebswelle der Verbrennungskraftmaschine in Abhängigkeit davon, ob die erste Komponente 4 oder die zweite Komponente 5 angetrieben wird, unterschiedlich sein, da gemäß der vorliegenden Erfindung auch der Wirkungsgrad der Komponente selbst berücksichtigt wird.

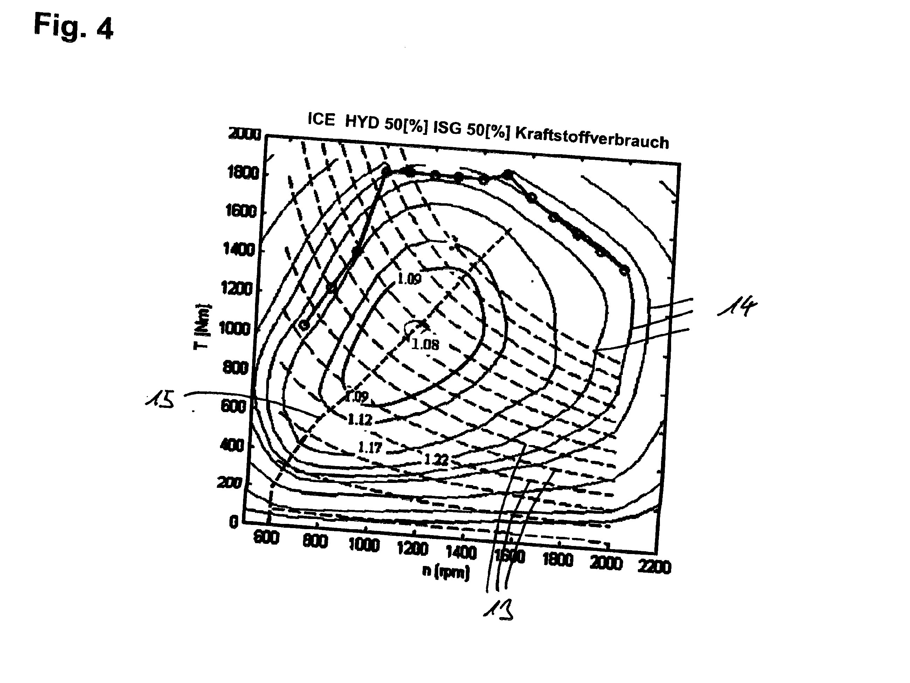

In Figur 4 ist nun ein überlagertes Diagramm gezeigt, welches für einen Betrieb erstellt wurde, bei welchem 50 % der Leistung von der ersten Komponente 4 und 50 % der Leistung von der zweiten Komponente 5 abgenommen werden. Dabei sind wiederum die Linien gleicher Leistung 13 sowie Linien gleichen Verbrauchs 14 eingezeichnet.

Eine solche Linie 13 gleicher Leistung stellt damit eine Systemkennlinie im Sinne der vorliegenden Erfindung dar, da durch jeden der Betriebspunkte auf der Linie die geforderte Abgabeleistung zur Verfügung gestellt werden kann. Die Optimierungsfunktion ermittelt nun auf den Linien 13 gleicher Leistung den Betriebspunkt mit dem geringsten Kraftstoffverbrauch. Die für unterschiedliche Leistungen optimalen Betriebspunkte bei der geforderten Aufteilung der Leistung auf die jeweiligen Abtriebe sind dabei als Linie 15 im Diagramm eingezeichnet.

Gemäß der vorliegenden Erfindung wird damit jeweils anhand der geforderten Leistung der einzelnen Komponenten der optimale Betriebspunkt bestimmt, wozu erfindungsgemäß neben dem Verbrauchkennfeld der Verbrennungskraftmaschine auch die jeweiligen Wirkungsgrade der angetriebenen Komponenten an den entsprechenden Betriebspunkten berücksichtigt wird und insbesondere die Algorithmen zur Ermittlung der Systemkennlinien und Identifizierung des günstigsten Betriebspunktes hinsichtlich aller nutzbaren Freiheitsgrade.

Die Steuerung steuert dann, gegebenenfalls unter Berücksichtigung der Systemdynamik, den Verbrennungsmotor auf den Soll-Betriebspunkt und passt die Stellgrößen der Komponenten entsprechend an.

Erfindungsgemäß kann also ein Betrieb mit minimiertem Kraftstoffverbrauch ermöglicht werden.

## Patentansprüche

1. Steuerung für das Antriebssystem einer Arbeitsmaschine, wobei das Antriebssystem eine Verbrennungskraftmaschine (1) mit mindestens zwei Abtrieben umfasst, über welche die Verbrennungskraftmaschine mindestens zwei Komponenten (4, 5) des Antriebssystems antreibt,
**dadurch gekennzeichnet,**
**dass** die Steuerung eine Optimierungsfunktion aufweist, welche einen Soll-Betriebspunkt der Verbrennungskraftmaschine (1) für die jeweils geforderten Leistungen der Komponenten (4, 5) auf Grundlage eines Verbrauchskennfeldes (6) der Verbrennungskraftmaschine und von Wirkungsgrad-Kennfeldern (7,7') der angetriebenen Komponenten (4, 5) bestimmt.

2. Steuerung nach Anspruch 1, wobei mindestens eine und vorteilhafterweise mehrere der Komponenten (4, 5) einen von der Verbrennungskraftmaschine angetriebenen Energiewandler und mindestens einen von dem Energiewandler mit Energie versorgten Verbraucher aufweist, wobei die Komponente vorteilhafterweise einen hydraulischen Antrieb aus Hydraulikpumpe und einem oder mehreren Verbrauchern, beispielsweise einen Hydraulikmotor oder mehrere Hydraulikmotoren, oder einen elektrischen Abtrieb aus Generator und mindestens einem elektrischen Verbraucher, beispielsweise einem Elektromotor, umfasst.

3. Steuerung nach Anspruch 1 oder 2, wobei mindestens eine und vorteilhafterweise mehrere der Komponenten (4, 5) eine Stellgröße aufweist, über deren Einstellung das Abtriebs-Drehmoment bei gegebener Abtriebs-Drehzahl einstellbar ist, wobei es sich insbesondere um den Schrägwinkel einer in einem hydraulischen Antriebssystem eingesetzten Hydraulikpumpe oder die Einstellung der Steuerelektronik in einem elektrischen Antriebssystem handelt.

4. Steuerung nach einem der vorangegangenen Ansprüchen, wobei die Optimierungsfunktion mindestens eine Funktion zur Bestimmung einer SystemKennlinie (13) von möglichen Betriebspunkten, durch welche die jeweils geforderten Leistungen der Komponenten (4, 5) erzielt werden können, umfasst.

5. Steuerung nach Anspruch 4, wobei die Optimierungsfunktion aus der SystemKennlinie (13) einen Betriebspunkt mit minimalem Kraftstoff-Verbrauch auswählt, wobei vorteilhafterweise beschränkende Randbedingungen berücksichtigt werden.

6. Steuerung Anspruch 4 oder 5, wobei die Steuerung eine Berechnungsfunktion aufweist, welche anhand von Wirkungsgrad-Kennfeldern (7,7') der angetriebenen Komponenten (4, 5) Einzel-Kennlinien von möglichen Betriebspunkten für den jeweiligen Abtriebe und aus diesen eine Systemkennlinie der Verbrennungskraftmaschine berechnet.

7. Steuerung nach einem der vorangegangenen Ansprüchen, wobei die Steuerung eine erste Steuerebene aufweist, welche auf Änderungen in den Leistungsanforderungen durch Ansteuerung der Komponenten (4, 5) reagiert, und eine zweite Steuerebene, welche zur Einstellung eines optimalen Betriebspunktes den Soll-Betriebspunkt der Verbrennungskraftmaschine (1) und der Komponenten an die neuen Leistungsanforderungen anpasst.

8. Steuerung nach einem der vorangegangenen Ansprüche, mit einer Prädiktionsfunktion, welche zukünftige Leistungsanforderungen der Komponenten (4, 5) schätzt, wobei die Steuerung den Soll-Betriebspunkt der Verbrennungskraftmaschine (1) und der Komponenten (4, 5) unter Berücksichtigung der zukünftigen Leistungsanforderungen bestimmt.

9. Steuerung nach einem der vorangegangenen Ansprüche, mit einer Energie-Management-Funktion, wobei eine koordinierte Bestimmung des Soll-Betriebspunktes und des Energie-Managements erfolgt, wobei die Energie-Management-Funktion vorteilhafterweise zur Steuerung der EnergieZuführung zu und Energie-Entnahme aus einem mit dem Antriebssystem verbundenen Energiespeicher und/oder dem Wärmemanagement dient.

10. Steuerung nach einem der vorangegangenen Ansprüche, wobei es sich bei der Arbeitsmaschine um eine mobile Arbeitsmaschine handelt, insbesondere um eine mobile Erdbewegungsmaschine und/oder eine mobile Umschlagmaschine.

11. Steuerung nach einem der vorangegangenen Ansprüche, wobei die Abtriebs-Drehzahl der Komponenten (4, 5) in einem festen Verhältnis zur Drehzahl der Verbrennungskraftmaschine (1) steht, wobei vorteilhafterweise eine Getriebe mit konstanter Übersetzung oder ein direkter Antrieb der Komponenten vorgesehen ist.

12. Antriebssystem mit einer Steuerung nach einem der vorangegangenen Ansprüche.

13. Arbeitsmaschine mit einem Antriebssystem nach einem der vorangegangenen Ansprüche.

14. Verfahren zur Ansteuerung eines Antriebssystems einer Arbeitsmaschine, wobei das Antriebssystem eine Verbrennungskraftmaschine (1) mit mindestens zwei Abtrieben umfasst, über welche die Verbrennungskraftmaschine mindestens zwei Komponenten (4, 5) des Antriebssystems antreibt,
**dadurch gekennzeichnet,**
**dass** der Betriebspunkt der Verbrennungskraftmaschine (1) auf Grundlage der jeweils geforderten Leistungen der Komponenten(4, 5), eines Verbrauchskennfeldes (6) der Verbrennungskraftmaschine und von Wirkungsgrad-Kennfeldern (7,7') der angetriebenen Komponenten eingestellt wird.

15. Verfahren nach Anspruch 14, wobei eine Steuerung nach einem der Ansprüche 1 bis 11 zum Einsatz kommt.
